# EUROPÄISCHE PATENTANMELDUNG

(11) **EP 4 764 282 A1**
(43) Veröffentlichungstag der Anmeldung: **24.06.2026**
(21) Anmeldenummer: 25219949.2
(22) Anmeldetag: 02.12.2025
(51) Int. Cl.: F16L 27/00, B60K 37/00, B60R 16/03, F16L 35/00, F16L 37/50, F16L 43/00, F16L 43/02, F16L 47/18, H01R 13/627, H01R 13/639, H01R 24/20, H01R 24/76, H01R 35/00, H01R 35/04

(54) **VERBINDUNGSVORRICHTUNG FÜR EIN KRAFTFAHRZEUG ZUM VERBINDEN ZWEIER LEITUNGEN**

(30) Priorität: 19.12.2024 DE 102024138843
(71) Anmelder: Traton AB, 151 87 Södertälje (SE)
(72) Erfinder: Jochum, Christina, 80995 München (DE)

(57) **Zusammenfassung**

Die Verbindungsvorrichtung (1) umfasst eine erste und eine zweite Aufnahme (4, 5) jeweilig zur lösbaren Halterung eines Endabschnitt (2a, 3a) einer ersten und einer zweiten Leitung (2, 3) zum Transport eines Mediums aus der ersten Leitung (2) in die zweite Leitung (3) oder umgekehrt. Die Aufnahmen sind derart zueinander angeordnet, dass im gehalterten Zustand der Endabschnitte (2a, 3a) eine Abgangsrichtung (a1) der ersten Leitung (2) einen Winkel (α) kleiner 180° mit der Abgangsrichtung (a2) der zweiten Leitung (3) einschließt. Die Aufnahmen (4, 5) weisen jeweils eine Sekundärverriegelung (7) zur Halterung eines der Endabschnitte auf, wobei die Sekundärverriegelung (7) vorzugsweise gegenüber einem Primärhaltemechanismus (6) der Endabschnitte eine zusätzliche Sicherung gegen ein ungewolltes Lösen der Halterung des Endabschnitts (2a, 3a), ausgelöst durch Vibrationen, Rütteln oder Bewegungen der Verbindungsvorrichtung, bereitstellt. Hierdurch wird eine einfache, bauraumsparende und sichere Verbindung zweier Leitungen im Kraftfahrzeug ermöglicht.

## Beschreibung

Die Erfindung betrifft eine Verbindungsvorrichtung für ein Kraftfahrzeug zum Verbinden zweier Leitungen.

Bei der Herstellung von Kraftfahrzeugen stellt sich die Aufgabe, zwei Leitungen zum Transport eines Mediums miteinander zu verbinden, z. B. an einer Medientrennstelle, an der zwei Leitungsenden miteinander verbunden werden sollen. Bei den Leitungen kann es sich um elektrische, pneumatische oder hydraulische Leitungen handeln. Die Leitungen sollen dabei möglichst schnell und sicher miteinander verbunden werden können. Eine Herausforderung ist dabei oftmals beschränkt verfügbarer Bauraum. Beispielsweise ist im Bereich der Instrumententafel eines Kraftfahrzeugs der verfügbare Bauraum zur Unterbringung derartiger Medientrennstellen sehr begrenzt. Aus dem Stand der Technik sind hierfür zwar unterschiedliche Steckerlösungen bekannt, die über eine Steck- oder Rastverbindung ein schnelles Verbinden zweier Leitungen an einer Medientrennstelle ermöglichen. Ein zusätzlicher Platzbedarf ergibt sich aber oftmals durch den Kabelabgang inkl. Biegeradius, wenn der Leitungsabgang für beide Leitungen an gegenüberliegenden Enden eines Steckers liegt. Ferner können fahrzeugspezifische Belastungen, wie Vibrationen, Rütteln etc., zum ungewollten Lösen verbundener Leitungen führen.

Der Erfindung liegt die Aufgabe zugrunde, eine verbesserte Technik zum Verbinden zweier Leitungen zu schaffen, die insbesondere eine einfache, bauraumsparende und sichere Verbindung von Leitungen im Kraftfahrzeug ermöglicht.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Verbindungsvorrichtung für ein Kraftfahrzeug zum Verbinden zweier Leitungen. Die Verbindungsvorrichtung umfasst eine erste Aufnahme zur lösbaren Halterung eines Endabschnitts der ersten Leitung und eine zweite Aufnahme zur lösbaren Halterung eines Endabschnitts der zweiten Leitung. Hierbei ist die erste Aufnahme mit der zweiten Aufnahme zum Transport eines Mediums aus der ersten Leitung in die zweite Leitung oder umgekehrt gekoppelt. Die Kopplung erfolgt vorzugsweise mittels einer oder mehrerer Verbindungsleitungen zwischen der ersten und zweiten Aufnahme.

Ferner sind die erste Aufnahme und die zweite Aufnahme derart zueinander angeordnet, dass im gehalterten Zustand der Endabschnitte eine Abgangsrichtung der ersten Leitung einen Winkel, nachfolgend auch als Winkel α bezeichnet, kleiner 180° mit der Abgangsrichtung der zweiten Leitung einschließt. Dies bedeutet, dass sich die beiden Leitungen im gehalterten Zustand nicht in entgegengesetzte Richtungen von der Verbindungsvorrichtung weg erstrecken, sondern in einem Winkel, der kleiner als 180° ist. Dies ermöglicht ein bauraumkompaktes Verbinden zweier Leitungen in Situationen, wo diese sich im verbundenen Zustand nicht in entgegengesetzte Richtungen voneinander weg erstrecken sollen.

Die Abgangsrichtung der ersten Leitung ist die Richtung, in der sich die erste Leitung ausgehend vom Endabschnitt erstreckt, insbesondere von der Verbindungsvorrichtung weg erstreckt. Entsprechend ist die Abgangsrichtung der zweiten Leitung die Richtung, in der sich die zweite Leitung ausgehend vom Endabschnitt erstreckt, insbesondere von der Verbindungsvorrichtung weg erstreckt. Die Abgangsrichtung kann daher auch als Leitungserstreckungsrichtung bezeichnet werden oder als Erstreckungsrichtung, in der sich die Leitung ausgehend vom Endabschnitt von der Verbindungsvorrichtung weg erstreckt. Die Abgangsrichtung kann somit identisch oder entgegengesetzt zur Flussrichtung eines Mediums sein, das in der Leitung fließt.

Gemäß einer besonders bevorzugten Ausführungsform weisen die Aufnahmen jeweils einen Primärhaltemechanismus (auch bezeichnet als ersten Haltemechanismus) und eine Sekundärverriegelung zur Halterung eines der Endabschnitte auf. Die Sekundärverriegelung stellt vorzugsweise gegenüber dem Primärhaltemechanismus der Endabschnitte eine zusätzliche Sicherung gegen ein ungewolltes Lösen der Halterung des Endabschnitts bereit. Das ungewollte Lösen kann z. B. durch Vibrationen, Rütteln oder Bewegungen der Verbindungsvorrichtung ausgelöst sein. Dies ermöglicht ein besonders sicheres Verbinden der beiden Leitungen, die sich auch bei Vibrationen, Rütteln etc., welche im Betrieb von Kraftfahrzeugen, insbesondere Nutzfahrzeugen, auftreten können, nicht löst.

Die Sekundärverriegelung kann auch als Zusatzverriegelung oder Zusatzhaltemechanismus bezeichnet werden, da sie zusätzlichen zum primären Haltemechanismus ein zusätzliches Sicherungssystem bereitstellt, um den Endabschnitt in der Aufnahme zu befestigen. Beispielsweise kann die Sekundärverriegelung eine Zugentlastung für den entsprechenden Endabschnitt ausbilden. Dadurch kann die Leitungsausreißkraft und damit die Verbindungssicherheit erhöht werden. Die Zugentlastung kann z. B. durch den Einsatz von Klemmen oder speziellen Zugentlastungsbügeln realisiert werden, die den Endabschnitt der Leitung mechanisch fixieren und verhindern, dass Zugkräfte auf den Endabschnitt übertragen werden. Dabei kann der Endabschnitt so befestigt sein, dass die auftretenden Zugkräfte auf ein Gehäuse oder eine andere stabile Struktur der Verbindungsvorrichtung abgeleitet werden, wodurch die empfindlichen Verbindungsstellen entlastet und geschützt werden.

Zudem oder alternativ kann die Sekundärverriegelung eine Verriegelung für den entsprechenden Endabschnitt ausbilden. Dadurch kann auf einfache Weise eine zweite Sicherungsebene erzielt werden. Der primäre Haltemechanismus kann z. B. eine Steckverbindung sein, bei der die Aufnahme als Aufnahmehülse oder Buchse für den entsprechenden Leitungsabschnitt ausgebildet ist, der in die Aufnahmehülse oder Buchse eingesteckt wird. Die Sekundärverriegelung kann z. B. einen Riegel oder einen Rastmechanismus bereitstellen, um den eingesteckten Leitungsabschnitt zusätzlich durch Verriegeln oder Einrasten zu sichern.

In einer weiteren Ausführungsform sind die erste Aufnahme und die zweite Aufnahme derart zueinander angeordnet, dass der Winkel α zwischen den Abgangsrichtungen 0° beträgt, so dass eine Transportrichtung eines Mediums aus der ersten Leitung in die zweite Leitung oder umgekehrt durch die Verbindungsvorrichtung um 180° gedreht wird. Diese Ausführungsform ermöglicht eine besonders bauraumkompakte Realisierung einer Leitungsverbindung ohne störenden Biegeradius der Leitungen, wenn diese sich ausgehend von der Verbindungsvorrichtung in die gleiche Richtung erstrecken sollen.

In einer weiteren Ausführungsform sind die erste Aufnahme und die zweite Aufnahme derart zueinander angeordnet, dass der Winkel α zwischen den Abgangsrichtungen 90° oder im Wesentlichen 90° beträgt. Diese Ausführungsform ermöglicht eine besonders bauraumkompakte Realisierung einer Leitungsverbindung ohne störenden Biegeradius der Leitungen, wenn diese sich ausgehend von der Verbindungsvorrichtung in einem 90°-Winkel zueinander erstrecken sollen.

In einer weiteren Ausführungsform weist die Verbindungsvorrichtung ferner ein Gelenk, z. B. ein Drehgelenk, auf, mittels dessen ein Winkel α zwischen den Abgangsrichtungen der Leitungen einstellbar (festlegbar) ist. Vorteilhaft kann mittels des Gelenks die Verbindungsvorrichtung für unterschiedliche Anwendungen eingesetzt werden, so dass der Winkel zwischen den Leitungen anwendungsspezifisch anpassbar und optimierbar ist. Das Gelenk kann eine relative Verdrehung der Aufnahme zueinander ermöglichen und/oder eine Verdrehung zumindest einer der Aufnahmen relativ zu einem Trägerteil oder Gehäuseteil, auf dem die Aufnahmen gehaltert sind.

In einer weiteren Ausführungsform sind die Endabschnitte der Leitungen werkzeuglos in den Aufnahmen fixierbar und lösbar. Vorteilhaft ermöglicht die Verbindungsvorrichtung eine besonders einfache, bauraumsparende und zugleich schnelle, da werkzeuglose, Verbindung zweier Leitungen. Alternativ können die Endabschnitte der Leitungen mittels eines Schraubendrehers oder vorzugsweise anderen Handwerkzeugs in den Aufnahmen fixierbar und lösbar sein.

In einem Ausführungsbeispiel umfassen die Aufnahmen eine Steck-, Rast-, Press-, Spann-, Schraub und/oder Klemmeinrichtung zur Halterung eines Endabschnitts. Hierdurch wird eine schnelle, jedoch gleichzeitig sichere Verbindung der zwei Leitungen ermöglicht. Beispielsweise kann die werkzeuglose Verbindung mittels einer solcher Steck-, Rast-, Press-, Spann-, Schraub und/oder Klemmeinrichtung ermöglicht werden. Alternativ kann ein Schraubendreher oder ein anderes Handwerkzeug verwendet werden, um z. B. eine Rast- Schraub- oder Klemmverbindung zu lösen.

Vorstehend wurde bereits festgestellt, dass die Verbindungsvorrichtung optional ein Gelenk zum Einstellen eines Winkels zwischen den Abgangsrichtungen der Leitungen aufweisen kann. In einer vorteilhaften Weiterbildung hiervon kann das Gelenk aus einem faserverstärkten Kunststoff gefertigt sein. Zudem oder alternativ kann jeder Gelenkarm des Gelenks zwei sich parallel erstreckendende Tragelemente aufweisen, die jeweils eine auf das Gelenk wirkende externe Belastung anteilig aufnehmen. Jeder Gelenkarm kann somit als Doppeltragarm ausgeführt sein. In beiden Ausführungsformen wird vorteilhaft die Stabilität und Tragfestigkeit des Gelenks erhöht.

In einem weiteren Ausführungsbeispiel ist die Verbindungsvorrichtung ferner mit einem Feuchtigkeitsschutz ausgestattet, vorzugsweise mit einem Feuchtigkeitsschutz gemäß der IP-Schutzklasse 6k bei Fahrzeugen (z. B Schutzgrad IPX6 (bei DIN EN 60529) und/oder IPX6K (bei ISO 20653)). Vorteilhaft kann die Betriebssicherheit der Verbindungsvorrichtung erhöht werden, da diese besser gegenüber äußeren Einflüssen, insbesondere Feuchtigkeit, geschützt ist. Hierfür können an sich bekannte Techniken zur Ausbildung des Feuchtigkeitsschutzes zum Einsatz kommen. Beispielsweise kann die Verbindungsvorrichtung gesamtheitlich abgedichtet werden, z. B. durch Umkleidung mit einem feuchtigkeitsdichten Material. Im Falle von elektrischen Leitungen könnte auch z. B. jeder Pin des Leitungssteckers im Bereich der Aufnahmen selbst abgedichtet werden.

Die Aufnahmen können jeweils als zylindrische Aufnahmehülse oder Buchse für den entsprechenden Endabschnitt einer der Leitungen ausgebildet sein. Die Verbindungsvorrichtung kann ein Gehäuseteil aufweisen, in das die Aufnahmen integriert sind, oder kann ein Trägerteil oder Sockelteil weisen, auf dem die Aufnahmen gehaltert sind. Die Verbindungsvorrichtung kann als Steckverbinder ausgeführt sein.

Bei den Leitungen kann es sich jeweils um elektrische, pneumatische oder hydraulische Leitungen handeln. Im Falle von pneumatischen oder hydraulischen Leitungen sind die erste Aufnahme und die zweite Aufnahme fluidisch gekoppelt, im Falle von elektrischen Leitungen elektrisch miteinander verbunden.

Ein weiterer Aspekt der vorliegenden Offenbarung betrifft ein Kraftfahrzeug, aufweisend eine Verbindungsvorrichtung wie hierin beschrieben. Das Kraftfahrzeug kann ein Nutzfahrzeug sein. Mit anderen Worten kann es sich um ein Kraftfahrzeug handeln, das zweckmäßig durch seine Bauart und Einrichtung insbesondere zur Beförderung von Personen, zum Transport von Gütern oder zum Ziehen von Anhängerfahrzeugen ausgelegt ist. Beispielsweise kann das Nutzfahrzeug z. B. ein Lastkraftwagen oder Omnibus sein.

In einem weiteren Ausführungsbeispiel ist die Verbindungsvorrichtung im Bereich einer Instrumententafel des Kraftfahrzeugs verbaut. Vorteilhaft kann im Bereich der Instrumententafel, wo in der Regel eine Vielzahl von Leitungen auf engem Raum verlegt werden müssen, eine einfache und bauraumsparende Lösung zur Verbindung von Leitungen realisiert werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Verbindungsvorrichtung gemäß einem Ausführungsbeispiel der vorliegenden Offenbarung;
- Figur 2: eine schematische Ansicht einer Verbindungsvorrichtung gemäß einem weiteren Ausführungsbeispiel der vorliegenden Offenbarung; und
- Figur 3: eine schematische Ansicht eines Kraftfahrzeugs und einer Instrumententafel mit einer verbauten Verbindungsvorrichtung gemäß einem Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

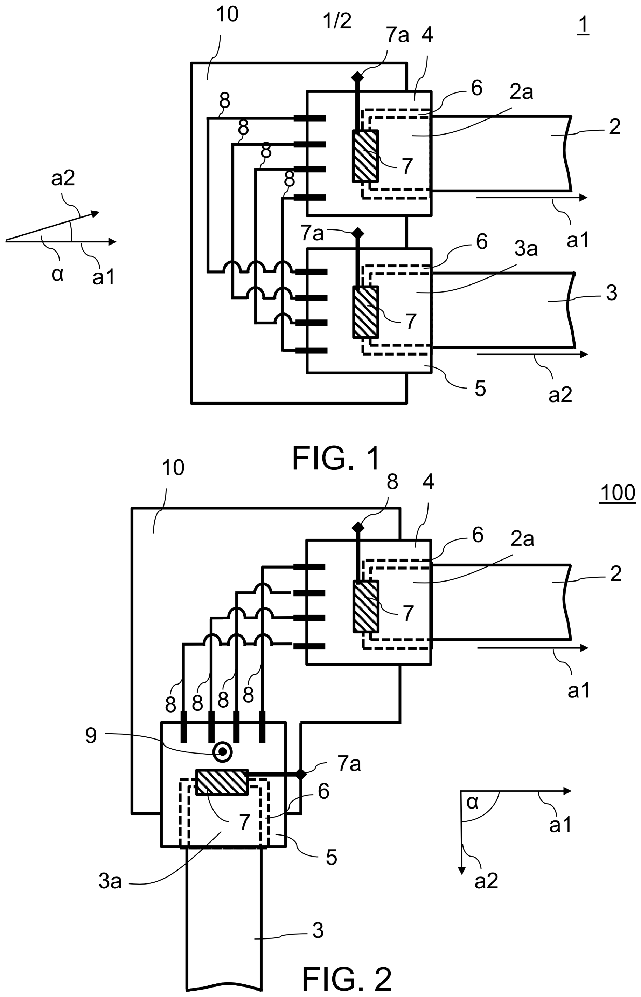

Figur 1 zeigt eine schematische Ansicht einer Verbindungsvorrichtung 1 zum Verbinden zweier Leitungen 2, 3. Die Leitungen 2,3 sind beispielhaft elektrische Leitungen. Die Verbindungsvorrichtung 1 umfasst eine erste Aufnahme 4 zur lösbaren Halterung eines Endabschnitts 2a der ersten Leitung 2 und eine zweite Aufnahme 5 zur lösbaren Halterung eines Endabschnitts 3a der zweiten Leitung 3. Hierbei ist die erste Aufnahme 4 mit der zweiten Aufnahme 5 elektrisch verbunden, um Strom aus der ersten Leitung 2 in die zweite Leitung 3 zu leiten und umgekehrt. Lediglich beispielhaft erfolgt hier die elektrische Kopplung mittels mehrerer elektrischer Verbindungsleitungen 8, über die die beiden Aufnahmen 4, 5 elektrisch verbunden sind und über die die einzelnen Adern der elektrischen Leitungen 2, 3 elektrisch verbunden werden können.

Der mit a1 gekennzeichnete Pfeil bezeichnet die Abgangsrichtung der ersten Leitung 2, d. h. diejenige Richtung, in der sich die erste Leitung 2 ausgehend vom Endabschnitt 2a von der Verbindungsvorrichtung 1 bzw. der Aufnahme 4 weg erstreckt, wenn die erste Leitung 2 in der Aufnahme 4 gehaltert ist.

Der mit a2 gekennzeichnete Pfeil bezeichnet entsprechend analog die Abgangsrichtung der zweiten Leitung 3, d. h. diejenige Richtung, in der sich die zweite Leitung 3 ausgehend vom Endabschnitt 3a von der Verbindungsvorrichtung 1 bzw. der Aufnahme 5 weg erstreckt, wenn die erste Leitung 2 in der Aufnahme 5 gehaltert ist.

Eine Besonderheit der Verbindungsvorrichtung 1 ist, dass die beiden Leitungsabgänge hier nur an einer Seite der Verbindungsvorrichtung 1 sind, so dass die beiden Leitungsabgänge in die gleiche Richtung verlaufen. Die Abgangsrichtungen a1, a2 zeigen somit in die gleiche Richtung. Der Winkel α zwischen den Abgangsrichtungen a1 und a2 beträgt somit 0°, so dass eine Stromrichtung der ersten Leitung 2 in die zweite Leitung 3 oder umgekehrt durch die Verbindungsvorrichtung 1 um 180° gedreht wird.

Dies ermöglicht ein bauraumkompaktes Verbinden zweier Leitungen 2, 3 wenn diese aus einer Richtung kommen, da keine bauraumbeanspruchenden Biegeradien vonnöten sind, wie es der Fall wäre, wenn die Aufnahme auf gegenüberliegenden Seiten der Verbindungsvorrichtung 1 angeordnet wären und die Abgangsrichtungen entgegengesetzt wären bzw. der Winkel α 180° betragen würde.

Die beiden Aufnahmen 4, 5 können z. B. auf einem Trägerteil 10 angeordnet sein. Das Trägerteil 10 kann z. B. als ein Gehäuseteil ausgeführt sein, in das die Aufnahmen 4, 5 integriert sind. Die Aufnahmen 4, 5 können jeweils als zylindrische Aufnahmehülsen ausgeführt sein. Das Trägerteil 10 kann mit den Aufnahmen 4, 5 einteilig ausgeführt sein, z. B. als Spritzgussteil. Die Verbindungsvorrichtung 1 kann als Steckverbinder ausgeführt sein.

Die beiden Endabschnitte 2a, 3a sind lösbar mittels einer eine Steck-, Rast-, Press-, Spann-, Schraub- und/oder Klemmeinrichtung in der entsprechenden Aufnahme 4 oder 5 befestigbar. Hierbei können die Aufnahmen 4 und 5 entsprechend zweckmäßig ausgeführt sein, z. B. eine Aufnahmehülse ausbilden, in die der entsprechende Endabschnitt 2a oder 3a eingesteckt werden kann, und/oder eine Klemmeinrichtung aufweisen, um einen der Endabschnitt 2a, 3a lösbar zu haltern.

Bevorzugt weisen die Aufnahmen 4, 5 jeweils einen Primärhaltemechanismus 6 und eine Sekundärverriegelung 7 zur Halterung eines der Endabschnitte auf. Die Sekundärverriegelung ist so ausgeführt, dass sie gegenüber dem Primärhaltemechanismus 6 eine zusätzliche Sicherung gegen ein ungewolltes Lösen der Halterung des Endabschnitts, ausgelöst durch Vibrationen, Rütteln oder Bewegungen der Verbindungsvorrichtung, bereitstellt. Der Primärhaltemechanismus 6 und die Sekundärverriegelung 7 sind hier nur schematisiert dargestellt.

Beispielsweise kann der Primärhaltemechanismus 6 eine Steckverbindung ausbilden, wobei ein Endabschnitt 2a, 3a in die entsprechende Aufnahme, z. B. ausgeführt als Einsteckhülse, gesteckt wird. Mittels der Sekundärverriegelung 7 kann der eingesteckte Endabschnitt dann zusätzlich gesichert werden, z. B. über eine Verriegelung 7a, Rastnase o. Ä.. Die Verriegelung 7a kann z. B. von außen durch eine Handbetätigung oder durch ein einfaches Handwerkzeug gelöst werden.

Dies ermöglicht ein bauraumkompaktes und gleichzeitig sicheres Verbinden der beiden Leitungen, die sich auch bei Vibrationen, Rütteln etc., welche im Betrieb von Kraftfahrzeugen, insbesondere Nutzfahrzeugen, auftreten können, nicht löst.

Figur 2 zeigt eine weitere Ausführungsform, deren Besonderheit im Vergleich zur Ausführungsform der Figur 1 darin liegt, dass die Verbindungsvorrichtung 100 ein Gelenk 9 aufweist, mittels dessen der Winkel α zwischen den Abgangsrichtungen a1, a2 der Leitungen 2, 3 einstellbar ist. Das Gelenk 9, z. B. ein Drehgelenk, kann eine relative Verdrehung der Aufnahme 4, 5 zueinander ermöglichen und/oder eine Verdrehung zumindest einer der Aufnahmen 4, 5 relativ zu einem Trägerteil oder Gehäuseteil 10, auf dem die Aufnahmen gehaltert 5, 5 sind. Die Verbindungsvorrichtung 100 kann somit beispielsweise Winkelsteckverbinder mit einstellbarer Abgangsrichtung ausbilden.

In der in Figur 2 gezeigten Drehposition des Gelenks 9 ist der Winkel α 90°zwischen den Abgangsrichtungen a1 und a2 und könnte z. B. mittels des Gelenks auch auf einen hiervon abweichenden Winkel eingestellt werden, je nach verfügbaren Bauraum und Einbauanforderung.

Die Verbindungsvorrichtung kann ansonsten ausgeführt sein, wie die im Zusammenhang mit Figur 1 beschriebene Verbindungsvorrichtung 1, so dass auf die entsprechenden vorstehenden Ausführungen hierzu verwiesen wird.

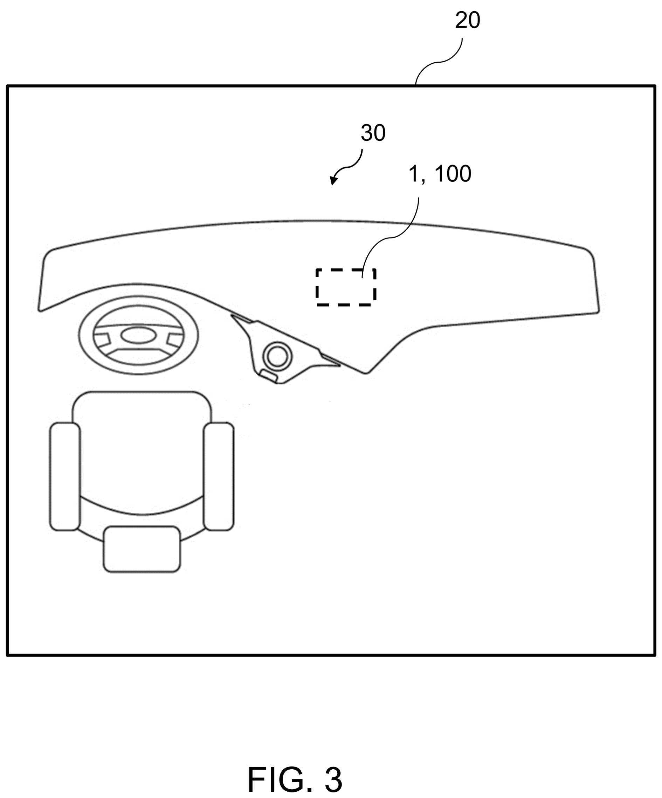

Figur 3 zeigt eine schematische Ansicht eines Kraftfahrzeugs 20 und einer darin verbauten Instrumententafel 30. In die Instrumententafel 30, z. B. im Innern der Instrumententafel, ist eine Verbindungsvorrichtung 1 oder 100 wie vorstehend beschrieben eingebaut.

Es versteht sich, dass die unter Bezugnahme auf die Figur 3 beschriebenen Techniken und Merkmale mit den Techniken und Merkmalen, die unter Bezugnahme auf die Figur 1 und 2 beschrieben sind, kombinierbar sind, einzeln oder in jeglicher Kombination. Das Kraftfahrzeug 20 kann als Nutzfahrzeug (z. B. ein Omnibus oder ein LKW) ausgeführt sein. Das Kraftfahrzeug 20 kann allerdings auch ein PKW sein. Die Instrumententafel 30 ist dabei an einer Vorderseite einer Fahrerkabine des Kraftfahrzeugs 20 angeordnet.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Insbesondere sind auch die Merkmale der Unteransprüche unabhängig von sämtlichen Merkmalen des unabhängigen Anspruchs 1 offenbart.

### Bezugszeichenliste

- 1, 100: Verbindungsvorrichtung
- 2, 3: Leitung
- 2a: Endabschnitt
- 3a: Endabschnitt
- 4: Erste Aufnahme
- 5: Zweite Aufnahme
- 6: Primärhaltemechanismus
- 7: Sekundärverriegelung
- 8: Leitungsader
- 9: Gelenk
- 10: Trägerteil
- 20: Kraftfahrzeug
- 30: Instrumententafel
- a1: Abgangsrichtung
- a2: Abgangsrichtung
- α: Winkel zwischen Abgangsrichtungen

## Patentansprüche

1. Verbindungsvorrichtung (1; 100) für ein Kraftfahrzeug zum Verbinden zweier Leitungen (2, 3), umfassend:
eine erste Aufnahme (4) zur lösbaren Halterung eines Endabschnitt (2a) der ersten Leitung (2);
eine zweite Aufnahme (5) zur lösbaren Halterung eines Endabschnitts (3a) der zweiten Leitung (3),
wobei die erste Aufnahme (4) mit der zweiten Aufnahme (5) zum Transport eines Mediums aus der ersten Leitung (2) in die zweite Leitung (3) oder umgekehrt gekoppelt ist, und
wobei die erste Aufnahme und die zweite Aufnahme derart zueinander angeordnet sind, dass im gehalterten Zustand der Endabschnitte (2a, 3a) eine Abgangsrichtung (a1) der ersten Leitung (2) einen Winkel (α) kleiner 180° mit der Abgangsrichtung (a2) der zweiten Leitung (3) einschließt; und
wobei die Aufnahmen (4, 5) jeweils eine Sekundärverriegelung (7) zur Halterung eines der Endabschnitte aufweisen, wobei die Sekundärverriegelung (7) vorzugsweise gegenüber einem Primärhaltemechanismus (6) der Endabschnitte eine zusätzliche Sicherung gegen ein ungewolltes Lösen der Halterung des Endabschnitts (2a, 3a), ausgelöst durch Vibrationen, Rütteln oder Bewegungen der Verbindungsvorrichtung, bereitstellt.

2. Verbindungsvorrichtung (1; 100) nach Anspruch 1,
a) wobei der Winkel (α) zwischen den Abgangsrichtungen 0° beträgt, so dass eine Transportrichtung eines Mediums aus der ersten Leitung (2) in die zweite Leitung (3) oder umgekehrt durch die Verbindungsvorrichtung (1) um 180° gedreht wird, oder
b) wobei der Winkel (α) zwischen den Abgangsrichtungen 90° beträgt.

3. Verbindungsvorrichtung (100) nach einem der vorherigen Ansprüche, ferner aufweisend ein Gelenk (9), mittels dessen ein Winkel (α) zwischen den Abgangsrichtungen (a1, a2) der Leitungen (2, 3) einstellbar ist.

4. Verbindungsvorrichtung (1; 100) nach einem der vorherigen Ansprüche, wobei die Endabschnitte (2a, 3a) der Leitungen (2, 3)
a) werkzeuglos in den Aufnahmen (4, 5) fixierbar und lösbar sind, oder
b) mittels eines Schraubendrehers oder vorzugsweise anderen Handwerkzeugs in den Aufnahmen (4, 5) fixierbar und lösbar sind.

5. Verbindungsvorrichtung (1; 100) nach einem der vorherigen Ansprüche, wobei die Aufnahmen (4, 5) eine Steck-, Rast-, Press-, Spann-, Schraub und/oder Klemmeinrichtung zur Halterung eines Endabschnitts umfasst.

6. Verbindungsvorrichtung (1; 100) nach einem der vorherigen Ansprüche,
wobei die Sekundärverriegelung (7) eine Zugentlastung für den entsprechenden Endabschnitt ausbildet.

7. Verbindungsvorrichtung (1; 100) nach einem der vorherigen Ansprüche,
wobei die Sekundärverriegelung (7) eine Verriegelung (7a) für den entsprechenden Endabschnitt ausbildet.

8. Verbindungsvorrichtung (100) nach einem der vorherigen Ansprüche, wenn abhängig von Anspruch 3, wobei
a) das Gelenk (9) aus einem mit faserverstärkten Kunststoff gefertigt ist und/oder
b) jeder Gelenkarm des Gelenks zwei sich parallel erstreckendende Tragelemente aufweist, die jeweils eine auf das Gelenk wirkende externe Belastung anteilig aufnehmen.

9. Verbindungsvorrichtung (1; 100) nach einem der vorherigen Ansprüche, wobei die Verbindungsvorrichtung mit einem Feuchtigkeitsschutz, vorzugsweise gemäß der IP-Schutzklasse 6k bei Fahrzeugen, ausgestattet ist.

10. Verbindungsvorrichtung nach einem der vorherigen Ansprüche, wobei die Leitungen jeweils elektrischen, pneumatische oder hydraulische Leitungen sind.

11. Kraftfahrzeug (20), vorzugsweise Nutzfahrzeug, aufweisend eine Verbindungsvorrichtung (1; 100) nach einem der vorherigen Ansprüche.

12. Kraftfahrzeug (20) nach Anspruch 11, wobei die Verbindungsvorrichtung (1; 100) im Bereich einer Instrumententafel (30) verbaut ist.
